Europäisches Patentamt

European Patent Office

Office européen des brevets

(11) Publication number: **0 263 084 B1**

# EUROPEAN PATENT SPECIFICATION

(45) Date of publication of patent specification: **17.07.91**   (51) Int. Cl.⁵: **A47J 37/12, A47J 37/04**

(21) Application number: **87830348.6**

(22) Date of filing: **01.10.87**

(54) Apparatus for frying food products particularly for domestic use.

(30) Priority: **03.10.86 IT 8258086**

(43) Date of publication of application:
**06.04.88 Bulletin 88/14**

(45) Publication of the grant of the patent:
**17.07.91 Bulletin 91/29**

(84) Designated Contracting States:
**AT BE CH DE ES FR GB GR IT LI LU NL SE**

(56) References cited:
**EP-A- 0 162 482       EP-A- 0 193 474**
**EP-A- 0 656 059       WO-A-84/03427**
**CH-A- 318 752        FR-A- 1 332 704**
**US-A- 4 173 925**

(73) Proprietor: **DE' LONGHI S.P.A.**
**Via L. Seitz 47**
**I-31100 Treviso(IT)**

(72) Inventor: **De' Longhi, Giuseppe**
**vicolo Rovero, 1**
**I-31100 Treviso(IT)**

(74) Representative: **Rapisardi, Mariacristina, Dr.**
**Proc.**
**STUDIO TECNICO LEGALE RAPISARDI Largo**
**V Alpini 15**
**I-20145 Milano(IT)**

Rank Xerox (UK) Business Services

## Description

The present invention relates to an apparatus for frying food products particularly for domestic use.

As is known, current apparata for frying food products, used mostly in the domestic environment, are provided with a body, having a lid, inside which is provided a tank for containing oil for cooking the food product.

Generally the food product to be fried is placed by the user within a metallic basket with the double aim of facilitating, at the end of the operation, the drip-off of the excess oil and of allowing its extraction from the fryer.

During the operation of the fryer, the basket is static and completely immersed, together with the food product placed therein, in the oil of the tank.

For this reason, current known fryers, in order to achieve a perfect cooking or frying, necessarily use considerable amounts of oil, the initial heating whereof to the preset and optimum temperature entails a considerable expenditure of electric power and a relatively long time.

Moreover, depending on the type of frying to be performed and on the type of food product to be fried, it is necessary to often perform top-ups with new oil, which is consumed during the use of the fryer, or even to replace it completely, entailing high operating costs for the fryer.

Moreover, it should be noted that during the cooking, for example, of a food product consisting of different pieces having mutually variable dimensions, said pieces sometimes tend to join together, forming a single body and thus not being uniformly fried at the end of the operation.

In order to avoid this disadvantage, the user must move, at preset intervals, the food product containment basket in order to obtain the separation of the individual pieces. WO 84 /03427 and CH-A-318752 both disclose electric fryers as defined in the precharacterizing part of claim 1.

Said electric fryers do not have a tank having its walls extending orthogonally from the bottom of the tank that is inclined and do not have rotating means for rotating the basket about its axis such that the basket, housed in the tank, can be rotated accordingly and a cyclical immersion of the food in the cooking oil can be achieved.

The aim proposed by the present invention is to eliminate the disadvantages described above by providing an apparatus for frying food products particularly for domestic use which has an extremely modest running cost since it requires, in order to execute optimum frying an extremely small amount of oil and accordingly a reduced energy consumption to heat the same to the optimum temperature.

Within the scope of this aim, an important object of the invention is devise an apparatus for frying food products particularly for domestic use wherein the food product containment basket is automatically subject to a motion which prevents, during the cooking of said food product, the mutual joining of the pieces which compose it.

Still another object of the present invention is to devise an apparatus for frying food products particularly for domestic use which, its external dimensions being equal to those of current fryers, has high internal capacity and can therefore fry a greater amount of food products.

No least object of the present invention is to provide an apparatus for frying food products particularly for domestic use featuring extremely short times for its preparation to cook the food product.

This aim, as well as these and other objects, are achieved by an apparatus for frying fod products, particularly for domestic use as defined in the characterizing part of claim 1.

Further characteristics and advantages of the invention will become apparent from the description of a preferred, but not exclusive, embodiment of the apparatus for frying food products particularly for domestic use according to the invention, illustrated only by way of non-limitative example in the accompanying drawings, wherein :

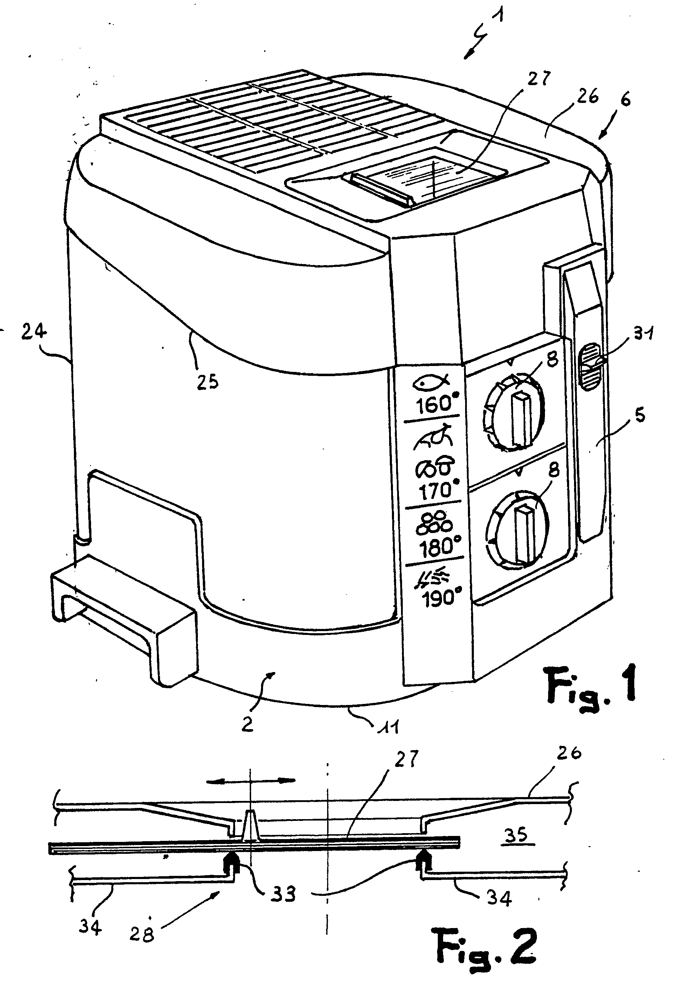

figure 1 is a perspective view of the apparatus for frying according to the invention;

figure 2 is a schematic transverse cross section view of the inspection port for inspecting the interior of the apparatus for frying according to the invention;

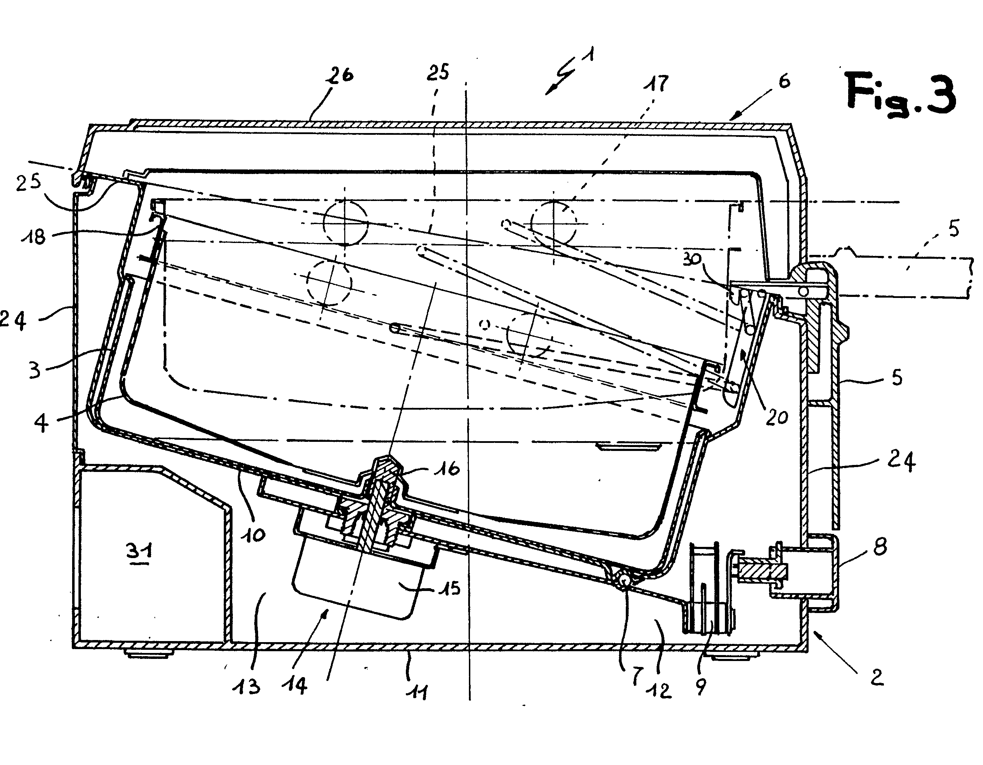

figure 3 is a lateral elevation view, in transverse cross section, of the apparatus illustrated in figure 1 according to the invention;

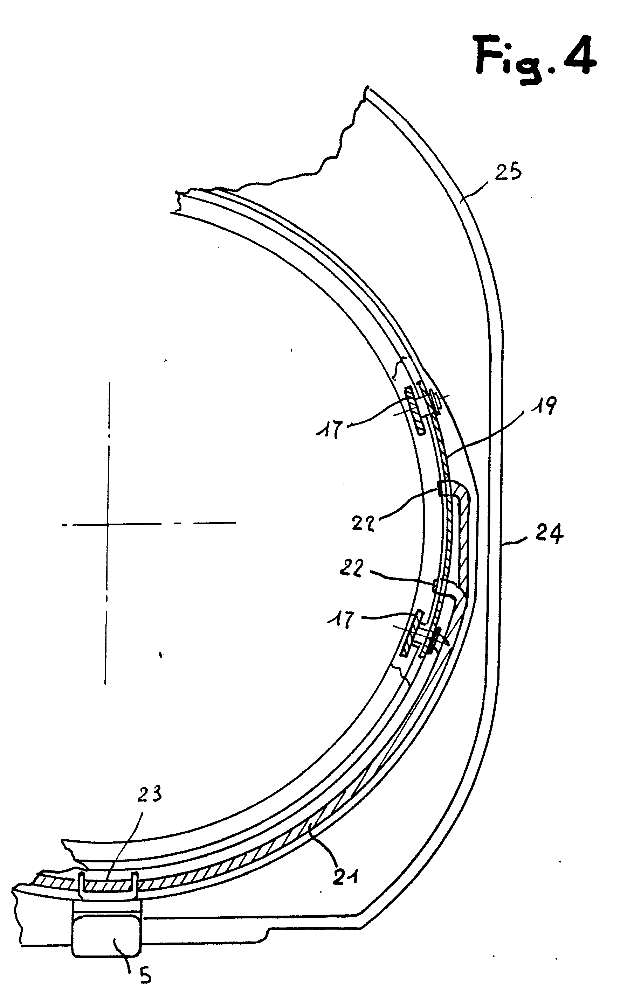

figure 4 is a plant view of the kinematic means for the movement of said basket inside the apparatus according to the invention.

With particular reference to the above described figures, the aoparatus for frying food products particularly for domestic use according to the invention, generally indicated by the reference numeral 1 comprises a supporting body, generally indicated by 2, for a tank 3 for a containing oil adapted for cooking the food product to be fried.

A basket 4 is accommodated inside the tank 3 and is provided with a handle 5 for its gripping so as to facilitate the extraction of the product to be fried out of the oil contained in said tank.

The body 2 is upwardly provided with a closing lid 6 for the tank 3, adapted to prevent most of all the ejection of particles of boiling oil during the operation of the fryer and furthermore to protect the user from any danger.

Means for heating the oil to a preset temperature are provided below the tank 3 and more precisely, for example, an electric resistor 7 activated by a control knob 8 and by a thermostat 9.

Advantageously, the tank 3 is provided with its bottom 10 inclined with respect to the resting base 11 of the supporting body 2 of the fryer and accordingly the perimetral surfaces of the tank 3 extend orthogonally from the bottom 10 and are therefore inclined with respect to the walls 24 of the body 2.

In this manner the tank 3 defines inside the body 2 an interspace provided, on the side facing towards the bottom 11, with a region 12 having a narrower cross section and with a region 13 having a wider cross section.

Means for rotating the basket 4, generally indicated by 14, are accommodated in the wider region 13, and comprise for example a known motor reducer 15 arranged coaxially with respect to the tank 3 and to said basket 4.

More in particular, the motor reducer 15 is provided with a shaft 16 which sealingly extends through the bottom 10 of the tank and inside the same so as to removably engage in an axial direction, and is rigidly associated in rotation with the basket 4 to cause its rotation about its own axis.

The rotation of the basket occurs by means of an annular guide 18 provided thereon which in turn is supported by a semi-annular supporting element 19 provided with wheels 17 adapted to engage in said guide.

The semi-annular supporting element 19 is associated, by kinematic means 20, with the handle 5 so as to move, according to the requirements, the basket from an operating position inside the tank 3 to a resting position outside the same and vice versa.

More in detail, the kinematic means comprise a curved bar 21 having its ends 22 rotatably connected to the semi-annular supporting element 19 and an intermediate portion 23 thereof oscillably connected to the handle 5 so that the basket 4, in resting position, is arranged above the free surface of the oil contained in the tank and parallel thereto while, in working position, it is partially immersed in the oil and is coaxial to said tank 3.

When the basket is in working position, the handle 5 is arranged parallel to the walls 24 of the body 2, while when the basket is in resting position it is perpendicular to said walls 24.

The handle 5 is furthermore provided with a locking element and more precisely with a tooth 30, which can be activated by means of a button 31 and is adapted to lock the basket in resting position so as to allow the dripping of the oil from the already fried product without the need to move the closing lid 6. The body 2 is naturally provided with an inlet for access to the tank 3 the edges 25 whereof have an inclination which is substantially similar to the inclination of the bottom 10 thereof.

The lid 6 is also provided with the perimetral portion of its edge shaped complementarily with respect to the edges 25 and having the same inclination as the access inlet, while the closing surface 26 of the lid is substantially parallel to the resting base 11 of the body 2 of the fryer. The closing surface 26 is furthermore provided with a port 27 provided with self-cleaning elements 28 which act during the sliding of the port so as to facilitate, on the part of the user, the internal inspection of the tank or of the product being fried even when the lid of said tank is closed.

The self-cleaning elements 28 are defined by two rubber pads 33 adapted to remove any sprays of oil which deposit on the inner face of the port and supported by two walls 34 which define, with the closing surface 26, a chamber 35 inside which said port 27 slides.

Only for the sake of greater precision, it should be furthermore observed that in the wider region 13 a chamber 31 is defined for the accommodation of accessories and more precisely, in the case at hand, of the power cable of the fryer, not illustrated in the drawings.

The operation of the fryer according to the invention is apparent from what has been described and illustrated, in particular with reference to the above described figures it can be observed that by operating one of the two knobs 8, and precisely the one which activates the electric resistor, it is possible to heat the oil inside the tank 3 to a preset temperature.

Advantageously, the time in which the basket 4, which contains the product to be fried, is to rotate about its own axis, by virtue of the presence of the rotary means 14, is selected by means of the other knob 8.

In this manner the temperature of the oil inside the tank 3 is kept at a preset temperature by virtue of the presence of a thermostat 9 while the basket 4, due to the inclination of the tank 3 and of its bottom, cyclically immerses and extracts the product to be fried in the oil contained in said tank 3.

In practice it has been observed that the fryer according to the invention is particularly advantageous in that it allows to fry, according to the dimensions of the basket, an amount of product with very little oil and moreover, by virtue of this last characteristic, to heat said oil to preset and optimum temperature levels in an extremely short time.

Together with what has been mentioned, the additions of oil and the possible replacement thereof allow, due to their extremely modest quantities, the use of the fryer with extremely modest costs.

**Claims**

1. Apparatus for frying food products particularly for domestic use, comprising: a supporting body (2) for a tank (3) for containing oil for cooking the food product, a basket (4) removably associated within said tank and provided with a handle (5) for the grip thereof, a lid (6) for the sealing closure of said tank, means (7,8,9) for heating said oil for a preset time and at preset temperature, characterized in that said tank (3) has its bottom (10) substantially inclined with respect to the resting base (11) of said supporting body and the wall of said tank extend substantially orthogonally from said bottom (10), rotating means (14) beeing provided for rotating said basket about its axis inside and coaxially with respect to said tank for the cyclically immersion of said food product in said oil.

2. Apparatus for frying according to claim 1, characterized in that said tank defines with said body an interspace provided, at least on the side of said bottom (10) with at least one region with a narrower cross section (12) and with at least one region with a wider cross section (13) accomodating said means for the rotation (14) of said basket.

3. Apparatus for frying according to one or more of the preceding claims, characterized in that said means for rotation (14) are substantially coaxial with respect to said tank (3) and to said basket (4).

4. Apparatus for frying according to one or more of the preceding claims, characterized in that it comprises an inlet for access to said tank (3) its edges (25) having an inclination substantially similar to the inclination of said bottom (10).

5. Apparatus for frying according to one or more of the preceding claims, characterized in that said lid (6) is provided with the perimetral edge portion facing towards said tank (3) having the same inclination as said access inlet, and with the closing surface (26) of said access inlet substantially parallel to said resting base (11) of said supporting body (2).

6. Apparatus for frying according to one or more of one preceding claims, characterized in that said handle (5) is connected, by kinematic means (20), to a semi-anular supporting element (19) provided with wheels (17) which engage slideably in an annular guide (18) of said basket, said kinematic means being adapted for the movement of said basket from a working position inside said tank to a resting position outside the same and vice versa.

7. Apparatus for frying according to one or more of the preceding claims, characterized in that said basket in said resting position is located above the free surface of said oil.

8. Apparatus for frying according to one or more of the preceding claims, characterized in that said basket in said working position is partially immersed in said oil.

9. Apparatus for frying according to one or more of the preceding claims, characterized in that said handle (5) is substantially parallel to the walls (24) of said supporting body in said working position and is substantially perpendicular thereto in said resting position.

10. Apparatus for frying according to one or more of the preceding claims, characterized in that said closing surface (26) of said lid (26) is provided with a small port (27) having self-cleaning elements which can be activated by its sliding for the internal inspection of said tank when said lid is associated with said body.

11. Apparatus for frying according to one or more of the preceding claims, characterized in that said means for rotation comprise a motor reducer (15) having preselectable speeds and provided with a shaft (16) which sealingly extends in said tank, is removably connected in an axial direction to the base of said basket, and is rigidly associated in rotation therewith.

12. Apparatus for frying according to one or more of the preceding claims, characterized in that said kinematic means comprise at least one curved bar (21) having its edges (22) rotatably connected to said semi-anular supporting element (19) and an intermediate region (23) thereof oscillably connected to said handle (5) an element (30,31) for locking said basket being furthermore provided associated with said handle, for the retention thereof in said resting position.

13. Apparatus for frying according to one or more of the preceding claims, characterized in that it comprises, in said wider cross section, an accessory-holder chamber (31).

**Revendications**

1. Friteuse pour des produits alimentaires, en particulier friteuse à usage domestique, comprenant un corps de support (2) pour un récipient (3) contenant l'huile pour frire le produit alimentaire, un panier (4) placé de manière amovible dans le récipient et comportant une poignée (5) permettant de le prendre, un couvercle (6) pour fermer le récipient, un moyen (7, 8, 9) pour chauffer l'huile pendant un temps et à une température prédéterminés, friteuse caractérisée en ce que le récipient (3) possède un fond (10) incliné par rapport à la surface d'appui (11) du corps de support et la paroi du récipient est perpendiculaire au fond (10), un moyen d'entraînement en rotation (14) étant prévu pour faire tourner le panier autour de son axe, à l'intérieur du récipient et coaxialement à celui-ci pour assurer une immersion cyclique du produit alimentaire dans l'huile.

2. Friteuse selon la revendication 1, caractérisée en ce que le récipient délimite avec le corps, un intervalle qui, au moins du côté du fond (10) présente une région de section plus étroite (12) et au moins une région de section plus large (13) pour recevoir le moyen d'entraînement en rotation (14) du panier.

3. Friteuse selon l'une ou plusieurs des revendications précédentes, caractérisée en ce que le moyen d'entraînement en rotation (14) est pratiquement coaxial au récipient (3) et au panier (4).

4. Friteuse selon l'une ou plusieurs des revendications précédentes, caractérisée en ce qu'elle comporte une entrée pour accéder au récipient (3) suivant ses bords (25) avec une inclinaison pratiquement analogue à l'inclinaison du fond (10).

5. Friteuse selon l'une ou plusieurs des revendications précédentes, caractérisée en ce que le couvercle (6) présente un bord périphérique tourné vers le récipient (3) avec la même inclinaison que l'entrée du réservoir et la surface de fermeture (26) de l'entrée d'accès est pratiquement parallèle à la surface d'appui (11) du corps de support (2).

6. Friteuse selon l'une ou plusieurs des revendications précédentes, caractérisée en ce que la poignée (5) est reliée par un moyen cinématique (20) à un élément de support (19) semi-annulaire comportant des galets (17) qui coopèrent par glissement avec un guide annulaire (18) du panier, ce moyen cinématique permettant de déplacer le panier d'une position de travail à l'intérieur du réservoir vers une position de repos à l'extérieur de celui-ci et inversement.

7. Friteuse selon l'une ou plusieurs des revendications précédentes, caractérisée en ce qu'en position de repos, le panier se trouve au-dessus de la surface libre de l'huile.

8. Friteuse selon l'une ou plusieurs des revendications précédentes, caractérisée en ce qu'en position de travail le panier est partiellement immergé dans l'huile.

9. Friteuse selon l'une ou plusieurs des revendications précédentes, caractérisée en ce que, en position de travail, la poignée (5) est pratiquement parallèle aux parois (24) du corps de support et, en position de repos, cette poignée est pratiquement perpendiculaire aux parois.

10. Friteuse selon l'une ou plusieurs des revendications précédentes, caractérisée en ce que la surface d'obturation du couvercle (26) comporte un petit orifice (27) avec des moyens d'auto-nettoyage qui peuvent être activés par coulissement pour permettre l'examen de l'intérieur du récipient lorsque le couvercle est placé sur le corps de l'appareil.

11. Friteuse selon l'une ou plusieurs des revendications précédentes, caractérisée en ce que le moyen d'entraînement en rotation comprend un motoréducteur (15) à vitesses présélectionnées et dont l'axe (16) traverse de manière étanche le récipient et est relié de manière amovible, dans la direction axiale, à la base du panier, mais solidairement en rotation, du panier.

12. Friteuse selon l'une ou plusieurs des revendications précédentes, caractérisée en ce que le moyen cinématique se compose d'au moins une tige courbe (21) dont les bords (22) sont reliés en rotation à l'élément de support semi-annulaire (19) et une région intermédiaire (23) pour être reliée en oscillation à la poignée (5) de l'élément (30, 31) pour le verrouillage, la poignée du panier permettant la retenue en position de repos.

13. Friteuse selon l'une ou plusieurs des revendications précédentes, caractérisée en ce qu'elle présente, dans sa section la plus grande, une chambre (31) pour recevoir des accessoires.

**Patentansprüche**

1. Vorrichtung zum Braten oder Ausbacken von Nahrungsmitteln, insbesondere für den Gebrauch im Haushalt, mit einem Haltekörper (2) für einen Behälter (3) zur Aufnahme von Öl zum Kochen des Nahrungsmittels, einem entfernbar innerhalb des Behälters angeordneten und mit einem Handgriff (5) zu seinem Ergreifen versehenen Korb (4), einem Deckel (6) zum Dichten verschließendes Behälters und Mitteln (7, 8, 9) zum Erhitzen des Öls für eine vorgegebene Zeit und bei einer vorgegebenen Temperatur, dadurch gekennzeichnet, daß der Behälter (3) einen im wesentlichen geneigt mit Bezug auf die Basis (11) des Haltekörpers verlaufenden Boden (10) aufweist und die Wand des Behälters sich im wesentlichen rechtwinkelig vom Boden (10) aus erstreckt, wobei Drehmittel (14) zum Drehen des Korbes um seine Achse innerhalb und koaxial bezüglich des Behälters zum zyklischen Eintauchen des Nahrungsmittels in das Öl vorhanden sind.

2. Vorrichtung zum Braten oder Ausbacken nach Anspruch 1, dadurch gekennzeichnet, daß der Behälter mit dem Körper einen Zwischenraum bildet, der mindestens an der Seite des Bodens (10) mit mindestens einem Bereich einen schmäleren Querschnitt (12) und mit mindestens einem Bereich einen breiteren Querschnitt (13) aufweist, so daß die Drehmittel (14) des Korbes untergebracht werden können.

3. Vorrichtung zum Braten oder Ausbacken nach einem oder mehreren der vorstehenden Ansprüche, dadurch gekennzeichnet, daß die Drehmittel (14) im wesentlichen koaxial mit Bezug auf den Behälter (3) und den Korb (4) sind.

4. Vorrichtung zum Braten oder Ausbacken nach einem oder mehreren der vorstehenden Ansprüche, dadurch gekennzeichnet, daß sie einen Einlaß für den Zugang zu dem Behälter (3) enthält, dessen Ränder (25) eine Neigung aufweisen, die der Neigung des Bodens (10) im wesentlichen ähnlich ist.

5. Vorrichtung zum Braten oder Ausbacken nach einem oder mehreren der vorstehenden Ansprüche, dadurch gekennzeichnet, daß der Deckel (6) an seinem dem Behälter (3) zugewandten Umfangsrandbereich die gleiche Neigung wie der Zugangseinlaß aufweist und mit seiner den Zugangseinlaß verschließenden Fläche (26) im wesentlichen parallel zur Basis (11) des Haltekörpers (2) verläuft.

6. Vorrichtung zum Braten oder Ausbacken nach einem oder mehreren der vorstehenden Ansprüche, dadurch gekennzeichnet, daß der Handgriff (5) über kinematische Mittel (20) mit einem halbringförmigen Halteelement (19) verbunden ist, das mit Rädern (17) versehen ist, die gleitbar in eine ringförmige Führung (18) des Korbes eingreifen, wobei die kinematischen Mittel zum Bewegen des Korbes aus einer Arbeitsposition innerhalb des Behälters in eine Ruheposition außerhalb von diesem und umgekehrt ausgebildet sind.

7. Vorrichtung zum Braten oder Ausbacken nach einem oder mehreren der vorstehenden Ansprüche, dadurch gekennzeichnet, daß der Korb in der Ruheposition oberhalb der freien Oberfläche des öls angeordnet ist.

8. Vorrichtung zum Braten oder Ausbacken nach einem oder mehreren der vorstehenden Ansprüche, dadurch gekennzeichnet, daß der Korb in der Arbeitsposition teilweise in das öl eingetaucht ist.

9. Vorrichtung zum Braten oder Ausbacken nach einem oder mehreren der vorstehenden Ansprüche, dadurch gekennzeichnet, daß der Handgriff (5) in der Arbeitsposition im wesentlichen parallel zu den Wänden des Haltekörpers und in der Ruheposition im wesentlichen senkrecht dazu ist.

10. Vorrichtung zum Braten oder Ausbacken nach einem oder mehrerer der vorstehenden Ansprüche dadurch gekennzeichnet, daß die verschließende Fläche (26) des Deckels (26) mit einer kleinen Öffnung (27) versehen ist, die selbstreinigende Elemente aufweist, die für die Inneninspektion des Behälters, wenn der Deckel mit dem Körper verbunden ist, durch Gleiten aktiviert werden können.

11. Vorrichtung zum Braten oder Ausbacken nach einem oder mehreren der vorstehenden Ansprüche, dadurch gekennzeichnet, daß die Drehmittel ein Motor-Reduktionsgetriebe (15) enthalten, das vorwählbare Geschwindigkeiten aufweist und mit einer Welle (16) versehen ist, die sich abgedichtet in den Behälter erstreckt, in axialer Richtung lösbar mit der Basis des Korbes verbunden ist und beim Drehen in fester Verbindung mit diesem steht.

12. Vorrichtung zum Braten oder Ausbacken nach einem oder mehreren der vorstehenden Ansprüche, dadurch gekennzeichnet, daß die kinematischen Mittel mindestens einen kurvenförmigen Stab (21) enthalten, dessen Enden (22) drehbar mit dem halbringförmigen Halteelement (19) verbunden sind und von dem ein
mittlerer Bereich (23) schwenkbar mit dem
Handgriff (5) verbunden ist, wobei überdies ein
Element (30, 31) zum Feststellen des Korbes
vorgesehen ist, das mit dem Handgriff verbunden ist, um ihn in der Ruheposition zu halten.

13. Vorrichtung zum Braten oder Ausbacken nach
einem oder mehreren der vorstehenden Ansprüche, dadurch gekennzeichnet, daß sie in
dem breiteren Querschnittsbereich eine Aufnahmekammer (31) für Zubehör enthält.

160°
170°
180°
190°

Fig. 1

Fig. 2

Fig. 3

# Fig.4